# EUROPÄISCHE PATENTANMELDUNG

(11) **EP 4 803 782 A1**
(43) Veröffentlichungstag der Anmeldung: **09.09.2026**
(21) Anmeldenummer: 25162219.7
(22) Anmeldetag: 07.03.2025
(51) Int. Cl.: F16H 57/025, F16H 57/033, F16H 57/031, F16H 57/029, F16H 57/021, F16H 57/02

(54) **GETRIEBEGEHÄUSEANORDNUNG FÜR INDUSTRIEGETRIEBE**

(71) Anmelder: Flender GmbH, 46395 Bocholt (DE); Flender Industriegetriebe GmbH, 09322 Penig (DE)
(72) Erfinder: MESSINK, Christoph, 46395 Bocholt (DE); JOSTEN, Guido, 46395 Bocholt (DE); PAGANO, Michele, 46395 Bocholt (DE)
(74) Vertreter: Michalski Hüttermann & Partner mbB

(57) **Zusammenfassung**

Getriebegehäuseanordnung 10 für ein Industriegetriebe 74, umfassend ein Gehäuseelement 12 und ein Flanschelement 14, wobei das Gehäuseelement 12 zumindest eine um eine Bohrungsachse A_{B} zentrische Bohrung 16 und eine die Bohrung 16 umgebende Flanschansatzfläche 18 ausbildet und im Bereich der Flanschansatzfläche 18 mehrere Gewindebohrungen 20 und mehrere gewindefreie Bohrungen 24 angeordnet sind, wobei das Flanschelement 14 einen Flanschkragen 22 und einen den Flanschkragen 22 umgebenden Anlagebund 26 ausbildet und wobei unter Anlage des Anlagebundes 26 an der Flanschansatzfläche 18 der Flanschkragen 22 mit einer Übermaßpassung in der Bohrung 16 des Gehäuseelements 12 einsitzt. Über die Übermaßpassung wird zudem eine saubere Zentrierung des Flanschelements 14 gegenüber der Bohrungsachse A_{B} der zentrischen Bohrung 16 des Gehäuseelements 12 erreicht und es können sichere Radialkraft übertragen werden, die im Betrieb beim Antrieb einer Arbeitsmaschine 76 durch das Industriegetriebe 74 entstehen.

## Beschreibung

Die Erfindung betrifft eine Getriebegehäuseanordnung für ein Industriegetriebe, umfassend ein Gehäuseelement und ein Flanschelement, wobei das Gehäuseelement zumindest eine um eine Bohrungsachse A_{B} zentrische Bohrung und eine die Bohrung umgebende Flanschansatzfläche ausbildet und im Bereich der Flanschansatzfläche mehrere Gewindebohrungen und mehrere gewindefreie Bohrungen angeordnet sind, wobei das Flanschelement einen Flanschkragen und einen den Flanschkragen umgebenden Anlagebund ausbildet.

Industriegetriebe, die beispielsweise als Stirnradgetriebe oder Kegelstirnradgetriebe ausgeführt sind, können für eine Vielzahl von Anwendungen eingesetzt werden. Die unterschiedlichen Anwendungen führen einerseits zu unterschiedlichen maßlichen Skalierungen des Gehäuseelements und andererseits zu einer unterschiedlichen Anbindung an eine angetriebene Arbeitsmaschine. Die Anbindung der jeweiligen Arbeitsmaschine erfolgt über eine Schnittstelle der Getriebegehäuseanordnung, wobei die Schnittstelle als Flanschelement ausgeführt sein kann. Über das Flanschelement werden dann auf das Gehäuse die Reaktionskräfte der Antriebsmaschine übertragen. Es besteht ein ständiges Bedürfnis die Verbindung zwischen Gehäuseelement und Flanschelement standardisiert und den Reaktionskräften angepasst zu gestalten.

Es ist die Aufgabe der Erfindung Maßnahmen aufzuzeigen, die eine standardisiert und den Reaktionskräften angepasste Verbindung zwischen Gehäuseelement und Flanschelement ermöglichen.

Die Lösung der Aufgabe erfolgt durch eine Getriebegehäuseanordnung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Getriebegehäuseanordnung für ein Industriegetriebe, umfassend ein Gehäuseelement und ein Flanschelement, wobei das Gehäuseelement zumindest eine um eine Bohrungsachse A_{B} zentrische Bohrung und eine die Bohrung umgebende Flanschansatzfläche ausbildet und im Bereich der Flanschansatzfläche mehrere Gewindebohrungen und mehrere gewindefreie Bohrungen angeordnet sind, wobei das Flanschelement einen Flanschkragen und einen den Flanschkragen umgebenden Anlagebund ausbildet und wobei unter Anlage des Anlagebundes an der Flanschansatzfläche der Flanschkragen mit einer Übermaßpassung in der Bohrung des Gehäuseelements einsitzt.

Bei dem Gehäuseelement kann es sich um ein vollständiges Getriebegehäuse oder auch nur um ein Teilgehäuse handeln. Das Getriebegehäuse oder auch das Teilgehäuse kann als Universalgehäuse für verschiedene Anwendungen ausgeführt sein. Das Getriebegehäuse kann in verschiedenen Aufstellweisen montiert werden. Im Allgemeinen sind dies die aufrechte, die horizontale und die vertikale Aufstellweise.

Das Flanschelement bilden zumindest einen Anlagebund aus, der zum Anschluss des Flanschelements an die Flanschansatzfläche des Gehäuseelements geeignet ist. Dies bedeutet, dass die jeweilige Oberflächenbeschaffenheit aufeinander abgestimmt ist. Das Flanschelement ist grundsätzlich lösbar an dem Gehäuseelement angebracht, wobei infolge der Übermaßpassung, mit der der Flanschkragen in der Bohrung des Gehäuseelements einsitzt, ein Abziehwerkzeug zum Lösen zum Einsatz kommen kann. Das Flanschelement bildet zweckmäßigerweise einen weiteren, von dem Gehäuseelement abgewandten Anlagebund aus, an dem in einer Betriebssituation eine Arbeitsmaschine angebracht sein kann. Dieser weitere Anlagebund kann in seinen Abmessungen größer sein als der dem Gehäuseelement zugewandte Anlagebund. Damit die von dem Getriebe über das Flanschelement auf die Arbeitsmaschine übertragenen Kräfte, insbesondere Radialkräfte, sicher übertragen werden können, sitzt der Flanschkragen über die Übermaßpassung - auch Schrumpfpassung genannt - spielfrei in der Bohrung des Gehäuseelements ein. Indem im Bereich Flanschkragen-Bohrung eine Abdichtung vorgesehen sein kann, ist die Verbindung zusätzlich auch noch öldicht. Über die Übermaßpassung wird zudem eine saubere Zentrierung des Flanschelements gegenüber der Bohrungsachse A_{B} der zentrischen Bohrung des Gehäuseelements erreicht. Insbesondere ist hier in einer bevorzugten Ausgestaltung ein in einer Umfangsnut des Flanschkragens einsitzender Dichtring vorgesehen.

In konkreter Ausgestaltung ist vorgesehen, dass das Flanschelement über in die Gewindebohrungen eingesetzte Verschraubungselemente gegenüber dem Gehäuseelement verschraubt ist. Hierzu sind in dem gehäuseseitigen Anlagebund korrespondierende Bohrungen vorgesehen.

In einer bevorzugten Ausgestaltung sind die gewindefreien Bohrungen als Sacklochbohrungen ausgeführt. Auch hier bildet bevorzugt der Anlagebund zu den gewindefreien Bohrungen korrespondierende zweite Bohrungen aus, wobei in den zweiten Bohrungen und in den gewindefreien Gewindebohrungen einsitzende Passstifte vorgesehen sind. Die Passstifte sitzen insbesondere spielfrei in den jeweiligen Bohrungen ein. Hierüber wird sichergestellt, dass ein übertragenes Drehmoment u.a. über die Passstifte übertragen wird und verhindert wird, dass infolge der mit einem gewissen Spiel einsitzenden Verschraubungselemente eine minimale Relativdrehung zwischen Gehäuseelement und Flanschelement stattfinden kann, was zu Undichtigkeit führen könnte.

Das Flanschelement kann in einer bevorzugten Ausgestaltung rotationssymmetrisch ausgeführt sein.

In einer zudem bevorzugten Ausgestaltung sind die Gewindebohrungen auf einem zu der Bohrungsachse A_{B} konzentrischen Lochkreis angeordnet. Besonders bevorzugt ist hier, wenn die Gewindebohrungen unter einer gleichmäßigen Teilung angeordnet sind. Es ist nicht erforderlich, dass die Gewindebohrungen in einem durchgängigen Kreis angeordnet sind, vielmehr ist bevorzugt, dass die Gewindebohrungen in Teilsegmenten angeordnet sind, wobei die Teilsegmente untereinander eine gleichmäßige Teilung aufweisen.

Die Aufgabe wird ferner gelöst durch eine Industrie-Applikation, umfassend eine Antriebseinheit mit einer ersten Leistungswelle und einer mechanischen Anwendung mit einer zweiten Leitungswelle, wobei die erste Leistungswelle und die zweite Leistungswelle über ein Industriegetriebe miteinander drehmomentübertragend verbunden sind, wobei das Industriegetriebe eine wie zuvor beschrieben ausgebildete Getriebegehäuseanordnung umfasst.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine Industrie-Applikation in Form eines Antriebsstrangs mit Industriegetriebe,
Fig. 2: ein Getriebegehäuse für ein Industriegetriebe als Einzelheit und
Fig. 3: Halbschnitte von zwei Ausführungen eines Flanschelements für ein Industriegetriebe.

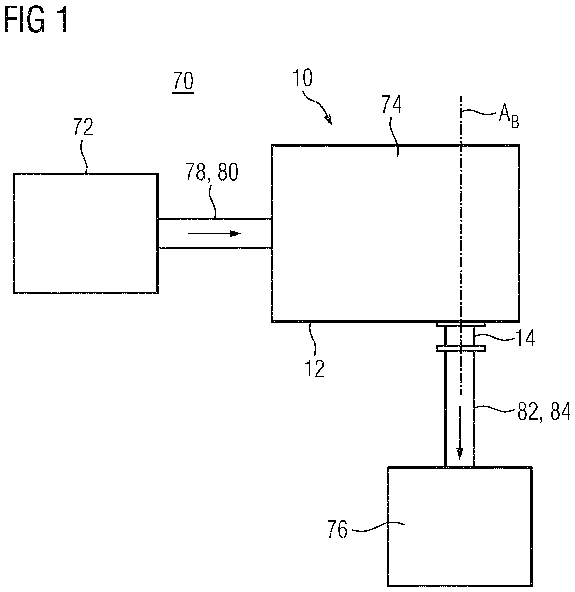

Die Figur 1 zeigt eine Industrie-Applikation 70 in Form eines Antriebsstrangs. Die Industrie-Applikation 70 umfasst ein Antriebsmittel 72, das beispielsweise als Elektromotor, als Verbrennungsmotor oder als Hydraulikmotor ausgebildet ist. Das Antriebsmittel 72 ist drehmomentübertragend mit einem Industriegetriebe 74 gekoppelt, das wiederum mit einer mechanischen Anwendung 76 verbunden ist. Das Antriebsmittel 72 ist zum Abgeben einer Antriebsleistung 78 ausgebildet, die über eine Leistungswelle 80 dem Getriebe 74 zugeführt wird. Durch das Getriebe 74 wird die eingehende Antriebsleistung 78, unter Berücksichtigung von Reibungsverlusten, bezüglich Drehzahl und Drehmoment gewandelt und als Ausgangsleistung 62 über eine Leistungswelle 84 an die mechanische Anwendung 76 weitergeleitet. Das Getriebe 74 kann beispielsweise als Stirnradgetriebe oder als Kegelstirnradgetriebe ausgeführt sein. Mit dem Bezugszeichen 10 ist eine Getriebegehäuseanordnung bezeichnet. Die Getriebegehäuseanordnung 10 umfasst ein als Getriebegehäuse ausgeführtes Gehäuseelement 12 und ein Flanschelement 14.

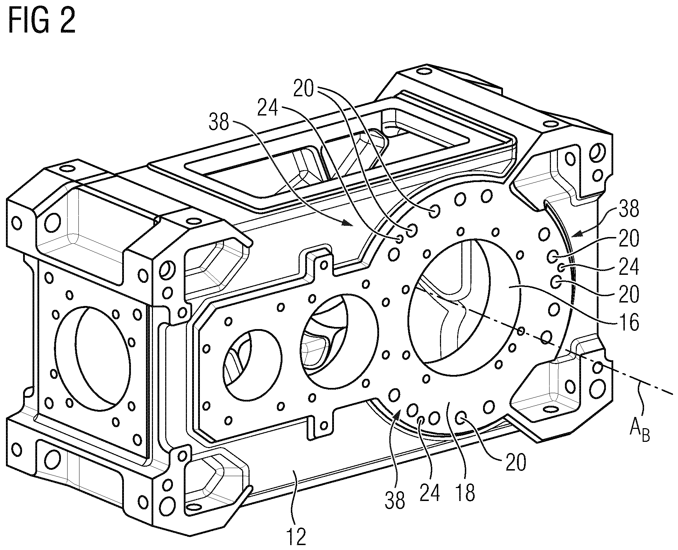

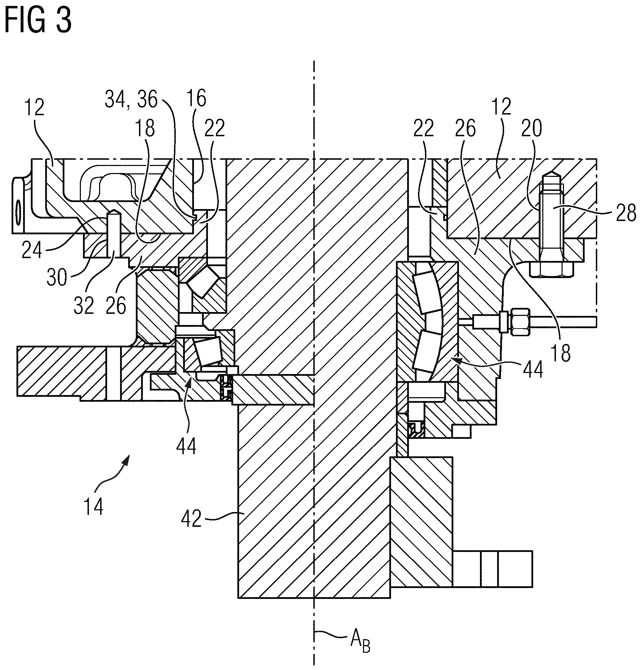

Die Figur 2 zeigt ein mögliches Getriebegehäuse 12 für eine Industriegetriebe 74 als Einzelheit. Das Getriebegehäuse 12 kann mehrere Bohrungen umfassen, wobei vorliegend auf die mit dem Bezugszeichen 16 markierte Bohrung fokussiert werden. Die Bohrung 16 verläuft zentrisch zu einer Bohrungsachse A_{B}. Auf einer Außenseite des Getriebegehäuses ist eine Flanschansatzfläche 18 ausgebildet, die die Bohrung umfängliche umgibt. Die Flanschansatzfläche 18 hat eine derartige Oberflächenbeschaffenheit, dass das Flanschelement von außen angesetzt werden kann, wie noch anhand der Figur 3 beschrieben wird. Im Bereich der Flanschansatzfläche 18 sind mehrere Gewindebohrungen 20 und mehrere gewindefreie Bohrungen 24 angeordnet. Zu erkennen ist, dass die Gewindebohrungen 20 auf einem zu der Bohrungsachse A_{B} konzentrischen Lochkreis angeordnet sind. Ferner sind die Gewindebohrungen 20 unter einer gleichmäßigen Teilung angeordnet. Zudem kann vorgesehen sein, dass die Gewindebohrungen 20 in Teilsegmenten 38 angeordnet sind, wobei die Teilsegmente 38 untereinander eine gleichmäßige Teilung aufweisen. Vorliegend sind drei Teilsegmente 38 vorhanden, in denen die Gewindebohrungen 20 angeordnet sind.

In der Figur 3 sind Halbschnitte von zwei Ausführungen eines Flanschelements 14 gezeigt. Die Halbschnitte sind komplementär zueinander und in der Bohrungsachse A_{B} der Bohrung 16 des Getriebegehäuses 12 gegeneinander gesetzt. Das Flanschelement 14 weist eine Nabe 40 und ein in der Nabe 40 über eine Lagerung 44 drehbar gehaltenes Wellenelement 42 auf. Eine weitere Beschreibung der Lagerung 44 ist hier entbehrlich. Die Nabe 40 des Flanschelements 14 weist einen Flanschkragen 22 und einen den Flanschkragen 22 umgebenden Anlagebund 26 auf. Im montierten Zustand, d.h. wenn der Anlagebund 26 an der Flanschansatzfläche 18 des Getriebegehäuses 12 anliegt, sitzt der Flanschkragen 22 mit einer Übermaßpassung in der Bohrung 16 des Gehäuseelements 12 ein.

Das Flanschelement 14 ist über in die Gewindebohrungen 20 eingesetzte Verschraubungselemente 28 gegenüber dem Gehäuseelement 12 verschraubt. Der Anlagebund 26 bildet zu den gewindefreien Bohrungen 24 korrespondierende zweite Bohrungen 30 aus, wobei in den zweiten Bohrungen 30 und in den gewindefreien Bohrungen 24 einsitzende Passstifte 32 vorgesehen sind. Die gewindefreien Bohrungen 24 sind vorliegend als Sacklochbohrungen ausgeführt. Zudem kann zu Zwecken der Abdichtung des Getriebegehäuses 12 ein in einer Umfangsnut 34 des Flanschkragens 22 einsitzender Dichtring 36 vorgesehen sein.

### Bezugszeichenliste

- 10: Getriebegehäuseanordnung
- 12: Gehäuseelement
- 14: Flanschelement
- 16: Bohrung
- 18: Flanschansatzfläche
- 20: Gewindebohrung
- 22: Flanschkragen
- 24: Bohrung
- 26: Anlagebund
- 28: Verschraubungselement
- 30: Bohrung
- 32: Passstift
- 34: Umfangsnut
- 36: Dichtring
- 38: Teilsegment
- 40: Nabe
- 42: Wellenelement
- 44: Lagerung
- 70: Industrie-Applikation
- 72: Antriebseinheit
- 74: Industriegetriebe
- 76: mechanischen Anwendung
- 78: Antriebsleistung
- 80: Leistungswelle
- 82: Ausgangsleistung
- 84: Leistungswelle

## Patentansprüche

1. Getriebegehäuseanordnung (10) für ein Industriegetriebe (74), umfassend ein Gehäuseelement (12) und ein Flanschelement (14),
wobei das Gehäuseelement (12) zumindest eine um eine Bohrungsachse (A_{B}) zentrische Bohrung (16) und eine die Bohrung (16) umgebende Flanschansatzfläche (18) ausbildet und im Bereich der Flanschansatzfläche (18) mehrere Gewindebohrungen (20) und mehrere gewindefreie Bohrungen (24) angeordnet sind,
wobei das Flanschelement (14) einen Flanschkragen (22) und einen den Flanschkragen (22) umgebenden Anlagebund (26) ausbildet und
wobei unter Anlage des Anlagebundes (26) an der Flanschansatzfläche (18) der Flanschkragen (22) mit einer Übermaßpassung in der Bohrung (16) des Gehäuseelements (12) einsitzt.

2. Getriebegehäuseanordnung (10) nach Anspruch 1, **dadurch gekennzeichnet, dass** die gewindefreien Bohrungen (24) als Sacklochbohrungen ausgeführt sind.

3. Getriebegehäuseanordnung (10) nach Anspruch 1 oder 2, **dadurch gekennzeichnet, dass** das Flanschelement (14) über in die Gewindebohrungen (20) eingesetzte Verschraubungselemente (28) gegenüber dem Gehäuseelement (12) verschraubt ist.

4. Getriebegehäuseanordnung (10) nach einem der Ansprüche 1 bis 3, **dadurch gekennzeichnet, dass** der Anlagebund (26) zu den gewindefreien Bohrungen (24) korrespondierende zweite Bohrungen (30) ausbildet, wobei in den zweiten Bohrungen (30) und in den gewindefreien Bohrungen (24) einsitzende Passstifte (32) vorgesehen sind.

5. Getriebegehäuseanordnung (10) nach einem der Ansprüche 1 bis 4, **dadurch gekennzeichnet, dass** das Flanschelement (14) rotationssymmetrisch ausgeführt ist.

6. Getriebegehäuseanordnung (10) nach einem der Ansprüche 1 bis 5, **dadurch gekennzeichnet, dass** die Gewindebohrungen (20) auf einem zu der Bohrungsachse (A_{B}) konzentrischen Lochkreis angeordnet sind.

7. Getriebegehäuseanordnung (10) nach Anspruch 6, **dadurch gekennzeichnet, dass** die Gewindebohrungen (20) unter einer gleichmäßigen Teilung angeordnet sind.

8. Getriebegehäuseanordnung (10) nach Anspruch 6 oder 7, **dadurch gekennzeichnet, dass** die Gewindebohrungen (20) in Teilsegmenten angeordnet sind, wobei die Teilsegmente untereinander eine gleichmäßige Teilung aufweisen.

9. Getriebegehäuseanordnung (10) nach einem der Ansprüche 1 bis 8, **dadurch gekennzeichnet, dass** ein in einer Umfangsnut (34) des Flanschkragens (22) einsitzender Dichtring (36) vorgesehen ist.

10. Industrie-Applikation (70), umfassend eine Antriebseinheit (72) mit einer ersten Leistungswelle (80) und einer mechanischen Anwendung (76) mit einer zweiten Leitungswelle (84), wobei die erste Leistungswelle (80) und die zweite Leistungswelle (84) über ein Industriegetriebe (74) miteinander drehmomentübertragend verbunden sind, **dadurch gekennzeichnet, dass** das Industriegetriebe (74) eine nach einem der vorangegangenen Ansprüche ausgebildete Getriebegehäuseanordnung (10) umfasst.
